# EUROPÄISCHE PATENTSCHRIFT

(11) **EP 1 435 423 B1**
(45) Veröffentlichungstag und Bekanntmachung des Hinweises auf die Patenterteilung: **26.10.2005**
(21) Anmeldenummer: 04007219.1
(22) Anmeldetag: 21.12.1999
(51) Int. Cl.: E05D 7/12, E05D 5/08, E05D 5/04

(54) **Vorrichtung zur Befestigung eines Beschlagteils an einer Möbeltür**
Device for mounting a fitting element to a furniture door
Dispositif de fixation d'une pièce de ferrure à une porte de meuble

(30) Priorität: 11.02.1999 DE 29902443 U; 01.04.1999 DE 29906051 U; 04.05.1999 DE 29907930 U
(43) Veröffentlichungstag der Anmeldung: 07.07.2004
(62) Teilanmeldung aus: 99125584.5
(73) Patentinhaber: Arturo Salice S.p.A., I-22060 Novedrate (Como) (IT)
(72) Erfinder:
(74) Vertreter: Laufhütte, Dieter

(56) Entgegenhaltungen:
- DE-A- 2 150 409
- US-A- 5 195 214
- US-A- 5 239 730
- US-A- 5 347 687

## Beschreibung

Die Erfindung betrifft eine Vorrichtung nach dem Oberbegriff des Anspruchs 1.

Beispielsweise bei dem Anbringen von Möbeltüren an den Seitenwänden von Schränken ist die Montagearbeit wesentlich erleichtert, wenn die Scharnierarme der bereits an den Möbeltüren vormontierten Scharniere nicht mit den Seitenwänden oder bereits an diesen befestigten Grundplatten verschraubt werden müssen, sondern durch Schnappverbindungen einfach auf an den Seitenwänden vormontierte Grundplatten aufgerastet werden können. Derartige Rastverbindungen zwischen vormontierten Grundplatten und mit Rasteinrichtungen versehenen Scharnierarmen, die üblicherweise an einer den Scharnierarm tragenden Zwischenplatte angeordnet sind, sind in unterschiedlichen Ausführungsformen bekannt. Diese leicht und schnell zu montierenden Rastverbindungen bedingen jedoch üblicherweise aufwendige und daher die Scharniere bzw. deren Grund- und Zwischenplatten verteuernde Rasteinrichtungen.

Eine gattungsgemäße Vorrichtung nach dem Oberbegriff des Anspruchs 1 ist bereits aus der DE 2150209 A bekannt.

Aufgabe der Erfindung ist es daher, eine Befestigungsvorrichtung der eingangs angegebenen Art zu schaffen, die eine einfache und schnelle Verbindung des Beschlagteils ermöglicht und auch einfach und schnell wieder lösbar ist.

Erfindungsgemäß wird diese Aufgabe durch die Merkmale des Anspruchs 1 gelöst.

Gemäß der Erfindung ist die Verriegelungseinrichtung an der Unterplatte befestigt und mit dem Boden des Scharniertopfs in Verriegelungseingriff bringbar. Grundsätzlich könnte auch eine umgekehrte Anordnung vorgesehen, d.h. die Verriegelungseinrichtung am Scharniertopf angeordnet sein. Die zuvor beschriebene Ausführung besitzt jedoch Vorteile hinsichtlich einer platzsparenden und gleichzeitig einfach zu bedienenden Konfiguration.

Die Verriegelungseinrichtung besteht vorzugsweise aus einer formschlüssigen, lösbaren Schnellverriegelung, insbesondere kann sie als Verriegelungsexzenter ausgebildet sein. Die Verriegelungseinrichtung ist dabei zwischen einer Montagestellung, in der der Scharniertopf in die Ausnehmung ein- und auf die Unterplatte aufgesetzt werden kann, und einer Verriegelungsstellung, in der der Scharniertopf an der Unterplatte verriegelt ist, bewegbar. Eine besonders vorteilhafte Ausgestaltung besteht darin, daß an der Unterplatte ein drehbarer Exzenterkopf befestigt ist, der in seiner Verriegelungsstellung den Boden des Scharniertopfs übergreift. Der Exzenterkopf ist vorzugsweise scheibenförmig und sitzt auf einem ebenfalls exzentrischen Halsring, dessen Höhe etwa der Dicke des Scharniertopfbodens entspricht.

Um eine Behinderung der Lenker des Scharniers im geschlossenen Zustand zu vermeiden, kann der Boden des Scharniertopfs eine Vertiefung aufweisen, die den den Boden übergreifenden Abschnitt des Verriegelungsexzenters aufnimmt. Der Exzenterkopf steht also nicht als Hindernis über die Bodenfläche des Scharniertopfes vor, sondern ist im wesentlichen in der Vertiefung des Scharniertopfs abgesenkt.

Um den Scharniertopf über den Exzenterkopf schieben zu können, ist in der Vertiefung im Scharniertopfboden eine Ausnehmung vorgesehen, die von dem Exzenterkopf im montierten Zustand durchsetzt ist. Um eine Behinderung der Schmiedenker weitestgehend zu vermeiden und die Montage des Scharniertopfs zu vereinfachen, kann die Ausnehmung bzw. die Verriegelungseinrichtung ein wenig aus dem Zentrum des Scharniertopfs radial versetzt angeordnet sein. Vorzugsweise ist der radiale Versatz von der Seite weggerichtet, an der die Scharnierlenker am Scharniertopf angelenkt sind. Hierdurch ist im aufgeklappten Zustand des Scharniers die Verriegelungseinrichtung leicht zugänglich.

Um eine einfache Montage zu gewährleisten, ist vorteilhafterweise ein Anschlag zur Bestimmung der Montagestellung der Verriegelungseinrichtung vorgesehen. Der Anschlag kann mit dem vorzugsweise ebenfalls exzentrisch angeordneten Halsring des Exzenterkopfs zusammenwirken, der die Drehung des Exzenters begrenzt und seine Montagestellung bestimmt. Der Anschlag kann insbesondere als vorstehende Einprägung in der Unterplatte ausgebildet sein. Hierdurch fallen keine zusätzlichen Teile an und ein einfacher Aufbau ist gewährleistet.

In Weiterbildung der Erfindung wird der Scharniertopf von der Verriegelungseinrichtung gegen die Unterplatte gespannt. Vorzugsweise ist hierfür eine keilförmige Schrägfläche vorgesehen, die bei einer Bewegung der Verriegelungseinrichtung in ihre verriegelnde Stellung den Boden des Scharniertopfs auf die Unterplatte zieht. Das Festspannen des Scharniertopfs auf der Unterplatte bewirkt eine sichere, spiel- und wackelfreie Befestigung des anzulenkenden Teiles wie einer Türe. Die keilförmige Schrägfläche ist vorzugsweise an der Verriegelungseinrichtung, insbesondere dem Exzenterkopf vorgesehen. Grundsätzlich könnte die Schrägfläche auch umgekehrt an dem Scharniertopf bzw. der Unterplatte vorgesehen sein. Die zuvor beschriebene Ausführung besitzt jedoch Vorteile bei der Herstellung des Scharniertopfs bzw. der Unterplatte.

Ferner besteht eine vorteilhafte Ausführungsform der Erfindung darin, daß die Unterplatte einen im wesentlichen U-förmigen Querschnitt mit seitlich aus der Ausnehmung herausragenden Befestigungsflanschen besitzt, an denen die Unterplatte an der Tür fest montiert, beispielsweise verschraubt sein kann. Die Befestigung der Unterplatte mittels seitlich herausragender Flansche erlaubt längere Schrauben, da in diesem Bereich das anzulenkende Teil eine größere Dicke besitzt. Der Scharniertopf kann ebenfalls seitlich angeformte Flansche besitzen, die die Unterplatte vollständig überdecken. Hierdurch sind die Flansche der Unterplatte mit den daran angeordneten Befestigungsmitteln abgedeckt, eine optisch schöne Oberfläche wird erreicht. Insbesondere besitzen die an den Scharniertopf angeformten Flansche einen umlaufenden Steg, mit dem sie die Unterplatte paßgenau umfassen.

Ein Ausführungsbeispiel der Erfindung wird nachstehend anhand der Zeichnung näher erläutert. In dieser zeigt
- Fig. 1: einen Schnitt durch den Teil eines Scharniers mit einem Scharniertopf, der in einer Ausnehmung in einer Tür eingesetzt und befestigt ist, gemäß einer bevorzugten Ausführung der Erfindung,
- Fig. 2: eine Draufsicht auf den Scharniertopf des Scharniers gemäß Fig. 1, wobei in gestrichelten Linien eine unter dem Scharniertopf liegende Unterplatte dargestellt ist,
- Fig. 3: eine Draufsicht auf die Unterplatte mit einem daran befestigten Verriegelungsexzenter,
- Fig. 4: einen Schnitt durch die Unterplatte,
- Fig. 5: eine Draufsicht auf den Scharniertopf ähnlich Fig. 2, wobei der Scharniertopf im unmontierten Zustand, d.h. ohne Unterplatte, gezeigt ist, und
- Fig. 6: einen Schnitt durch den Scharniertopf entlang der Linie A-A in Fig. 5.

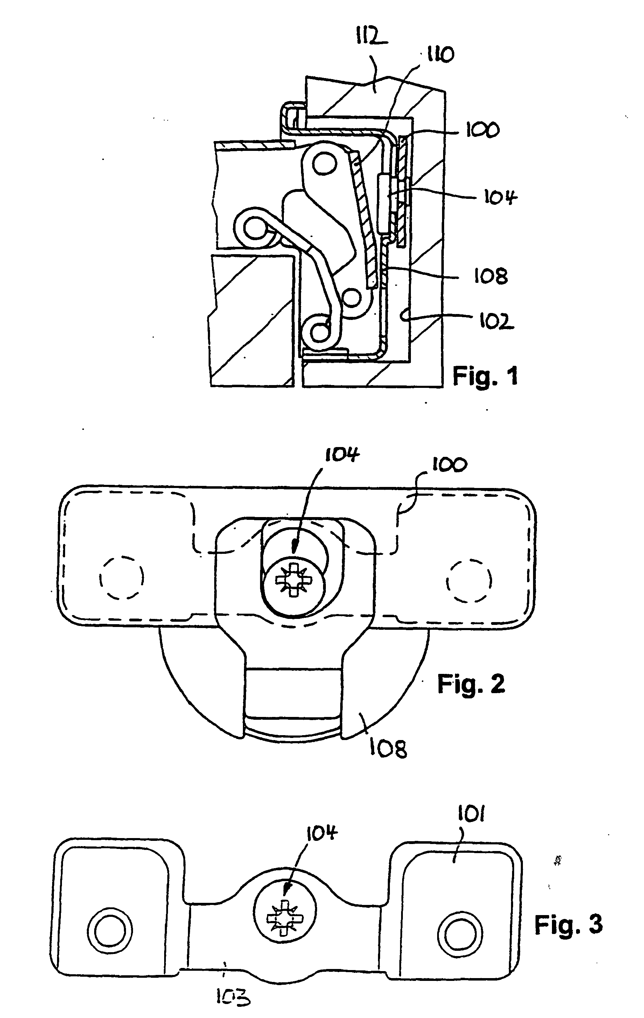

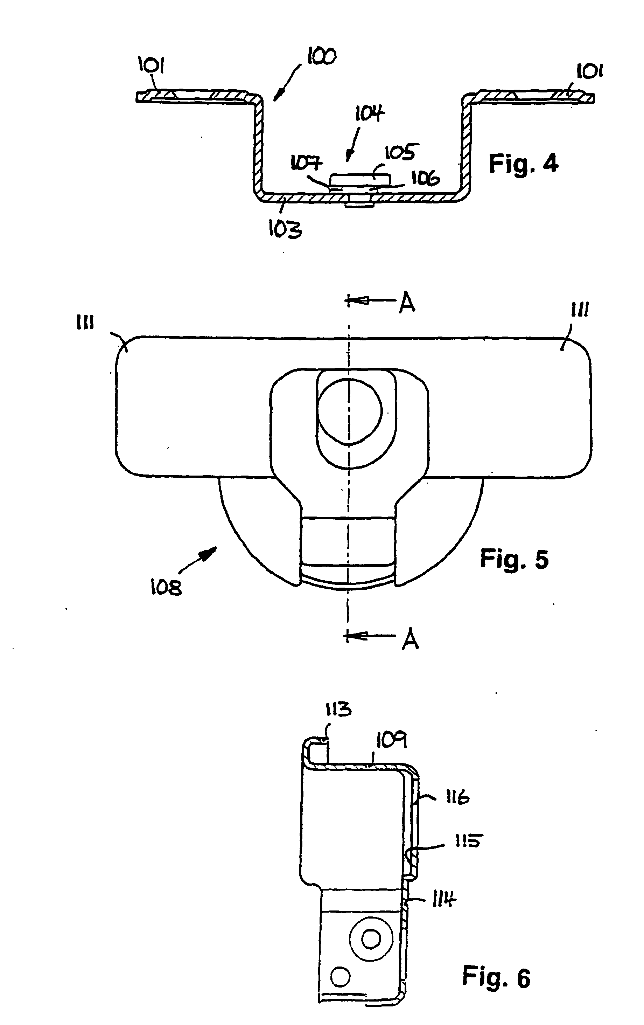

Die in den Fig.1 bis 6 gezeigte Vorrichtung zur Befestigung eines Scharniertopfes besitzt eine im wesentlichen U-förmige Unterplatte 100, die als Biege-Stanzteil aus Blech ausgebildet sein kann (vgl. Fig. 3 und 4). Die Unterplatte 100 besitzt seitlich auskragende, in einer gemeinsamen Ebene liegende Enden, die jeweils einen Befestigungsflansch 101 bilden. In den Befestigungsflanschen 101 ist jeweils eine Durchgangsbohrung ausgebildet, um die Unterplatte 100 mit Schrauben o. dgl. befestigen zu können.

Die Unterplatte 100 wird in eine gefräste Bohrung 102 in einer Tür o. dgl., die zur Aufnahme des Scharniertopfs bestimmt ist, eingesetzt und fest verschraubt. Vorzugsweise wird die Unterplatte 100 hierzu mit nicht gezeigten Dübeln versehen und maschinell montiert. Die U-förmige Ausbildung der Unterplatte 100 ist an die Wandungen bzw. die Gestalt der Ausnehmung für den Scharniertopf angepaßt.

An dem Bodenabschnitt 103 der Unterplatte 100 ist ein Verriegelungsexzenter 104 befestigt, der eine Verriegelungseinrichtung für den Scharniertopf bildet. Der Verriegelungsexzenter 104 ist mit der Unterplatte 100 um eine zum Boden der Ausnehmung 102 senkrechte Achse drehbar verbunden, insbesondere vernietet. Wie die Fig.1 und 27 zeigen, besitzt der Verriegelungsexzenter 104 einen scheibenförmigen Exzenterkopf 105, der auf einem ebenfalls exzentrischen Halsring 106 sitzt. Die Unterplatte 100 ist im Bereich der Bohrung, in der der Verriegelungsexzenter 104 drehbar sitzt, mit einer vorstehenden Einprägung 107 versehen, die einen Anschlag für den Halsring 106 des Verriegelungsexzenters 104 bildet, der die Drehung des Exzenters begrenzt und seine Montagestellung bestimmt (vgl. Fig. 4).

Der Scharniertopf 108 besitzt einen napfförmigen Topfabschnitt 109 mit im wesentlichen zylindrischen Querschnitt (vgl. Fig. 5 und 6), der in seinem Innenraum im zusammengeklappten Zustand des Scharnieres dessen darin angelenkten Lenker 110 aufnimmt (vgl. Fig. 1). Seitlich auskragend sind am oberen Rand des Topfabschnitts 109 Flansche 111 vorgesehen, die über die Ausnehmung 102 in der Tür hinausragen und an deren Innenseite aufliegen, so daß der Scharniertopf dort abgestützt ist. Die Flansche 111 sind derart bemessen und angeordnet, daß sie die Befestigungsflansche 101 der Unterplatte 100 vollständig überdecken. Sie besitzen an ihren Rändern umlaufend einen zur Türe 112 vorspringenden Steg 113 (vgl. Fig. 6), der die Befestigungsflansche der Unterplatte 100 paßgenau umfaßt und vollständig abdeckt.

Der Scharniertopf 108 weist an seinem Boden 114 eine senkenartige Vertiefung 115 mit einer Durchgangsbohrung 116 auf, die vom Exzenterkopf 105 im montierten Zustand des Scharniers durchsetzt wird. Diese Vertiefung 115 des Scharniertopfs 108 nimmt den Exzenterkopf 105 soweit auf, daß dieser den äußeren Lenker 110 des Scharniers in dessen geschlossenem Zustand nicht stört (vgl. Fig.1).

Die Vertiefung 115 und dementsprechend der Verriegelungsexzenter 104 sowie die gesamte Anordnung der Unterplatte 100 sind aus dem Zentrum des Scharniertopfs radial versetzt, und zwar von den Anlenkpunkten der Lenker 110 weg, so daß der Verriegelungsexzenter 104 zum einen die Lenker 110 nicht stört und zum anderen im geöffneten Zustand des Scharniers leichter zugänglich ist. Darüberhinaus wird das beim Öffnen und Schließen der Tür entstehende Moment auf den Scharniertopf besser aufgenommen.

Die Montage des Scharniers wird folgendermaßen bewerkstelligt:

Zunächst wird die Unterplatte 100 in die Türausnehmung 102 eingesetzt und dort mittels entsprechender Schrauben am Befestigungsflansch 101 maschinell montiert.

Der Scharniertopf 108 wird in der geöffneten Stellung des Scharniers in die Türausnehmung 102 ein- und auf die Unterplatte 100 aufgesetzt. Hierzu wird vorher der Verriegelungsexzenter 104 gegen den Anschlag 107 gedreht, so daß der Verriegelungsexzenter 104 in seiner Montagestellung ist. Beim Einsetzen des Scharniertopfs 108 wird der Exzenterkopf 105 durch die Durchgangsbohrung 116 im Topfboden 114 geführt, bis der Exzenterkopf 105 auf der Innenseite des Scharniertopfs 108 über dessen Boden 114 vorsteht.

In diesem eingesetzten Zustand des Scharniertopfes 108 wird dieser durch Drehung des Verriegelungsexzenters 104 an der Unterplatte 100 verriegelt. Hierbei übergreift der Exzenterkopf 105 in der aus Fig. 1 und Fig. 2 ersichtlichen Weise den Topfboden 114 des Scharniertopfs 108. Im Bereich der Flansche 111 des Scharniertopfes ist keine Verriegelung notwendig, so daß der Flansch 111 glatt ausgeführt werden kann.

Zweckmäßigerweise entspricht die Höhe des Halsrings 106 des Verriegelungsexzenters 104 der Dicke des Bodens 114 des Scharniertopfs 108. Die Unterseite des Exzenterkopfs 105 kann leicht geneigt sein, d.h. sie besitzt vorzugsweise eine keilförmige Schrägfläche, um eine geringe Spannkraft auszuüben. Der Scharnierkopf 108 wird also zu der Unterplatte 100 hin gespannt. Hiermit läßt sich eine feste, spielfreie Verriegelung des Scharniertopfs 108 erreichen.

## Patentansprüche

1. Vorrichtung zur Befestigung eines in eine Ausnehmung einer Tür u. degl. einsetzbaren Scharniertopfs, mit einer an dem vom Scharnier anzulenkenden Teil wie einer Türe u. dgl. befestigbaren Unterplatte, **dadurch gekennzeichnet, daß** die Unterplatte (100) in die Ausnehmung (102) einsetzbar und eine Verriegelungseinrichtung (104) zur Verriegelung des Scharniertopfs (108) an der Unterplatte (100) vorgesehen ist, wobei die Verriegelungseinrichtung- (104) als formschlüssige, lösbare Schnellverriegelung ausgebildet ist, die darin besteht, daß an der Unterplatte (100) bzw. an dem Boden des Scharniertopfs ein drehbarer Exzenterkopf (105) befestigt ist, der in seiner Verriegelungsstellung den Boden (114) des Scharniertopfs (108) bzw. die Unterplatte (100) übergreift.

2. Vorrichtung nach Anspruch 1, wobei die Verriegelungseinrichtung (104) an der Unterplatte (100) befestigt und mit dem Boden (114) des Scharniertopfs (108) in Verriegelungseingriff bringbar ist.

3. Vorrichtung nach Anspruch 1, **dadurch gekennzeichnet, daß** die Verriegelungseinrichtung an dem Boden des Scharniertopfs angebracht und mit der Unterplatte in Verriegelungseingriff bringbar ist.

4. Vorrichtung nach einem der vorhergehenden Ansprüche, wobei der Boden (114) des Scharniertopfs (108) eine Vertiefung (115) aufweist, die den den Boden übergreifenden Abschnitt der Verriegelungseinrichtung (104) aufnimmt, wobei vorzugsweise in der Vertiefung eine Ausnehmung (116) vorgesehen ist, die von der Verriegelungseinrichtung im montierten Zustand durchsetzt ist.

5. Vorrichtung nach einem der vorhergehenden Ansprüche, wobei die Verriegelungseinrichtung (104) den Scharniertopf (108) gegen die Unterplatte (100) spannt, wobei insbesondere eine keilförmige Schrägfläche an der Unterseite des Exzenterkopfer (105) vorgesehen ist, die bei Betätigung der Verriegelungseinrichtung den Boden (114) des Scharniertopfs (108) auf die Unterplatte zieht.

6. Vorrichtung nach einem der vorhergehenden Ansprüche, wobei die Unterplatte (100) einen im wesentlichen U-förmigen Querschnitt mit seitlich aus der Ausnehmung herausragenden Befestigungsflanschen (101) besitzt.

7. Vorrichtung nach einem der vorhergehenden Ansprüche, wobei der Scharniertopf (108) seitlich angeformte Flansche (111) besitzt, die die Unterplatte (100) vollständig überdecken, insbesondere mit einem umlaufenden Steg (113) diese paßgenau umfassen.

8. Vorrichtung nach einem der vorhergehenden Ansprüche, wobei ein Anschlag (107) zur Bestimmung der Montagestellung der Verriegelungseinrichtung (104) vorgesehen, insbesondere als vorstehende Einprägung in der Unterplatte (100) ausgebildet ist.

## Claims

1. A device for the fastening of a hinge cup which can be inserted into a cut-out of a door or the like comprising a bottom board which can be fastened to the part such as a door or the like to be hinged by the hinge, **characterised in that** the bottom board (100) can be inserted into the cut-out (102) and a latching device (104) is provided for the latching of the hinge cup (108) to the bottom board (100), with the latching device (104) being made as a shape-matched, releasable fast-latching device which consists of a rotatable eccentric head (105) which - in its latching position - engages over the base (114) of the hinge cup (108) or over the bottom board (100) being fastened to the bottom board (100) or to the base of the hinge cup.

2. A device in accordance with claim 1, wherein the latching device (104) is fastened to the bottom board (100) and can be brought into latching engagement with the base (114) of the hinge cup (108).

3. A device in accordance with claim 1, wherein the latching device is attached to the base of the hinge cup and can be brought into latching engagement with the bottom board.

4. A device in accordance with any one of the preceding claims, wherein the base (114) of the hinge cup (108) has a recess (115) which receives the section of the latching device (104) engaging over the base, with a cut-out (116) preferably being arranged in the recess through which the latching device passes in the mounted state.

5. A device in accordance with any one of the preceding claims, wherein the latching device (104) tensions the hinge cup (108) against the bottom board (100), with a wedge-shaped slanted surface in particular being provided at the lower side of the eccentric head (105) and drawing the base (114) of the hinge cup (108) onto the bottom board on actuation of the latching device.

6. A device in accordance with any one of the preceding claims, wherein the bottom board (100) has a substantially U-shaped cross-section with fastening flanges (101) projecting laterally from the cut-out.

7. A device in accordance with any one of the preceding claims, wherein the hinge cup (108) has flanges (111) which are shaped on laterally and which completely cover the bottom board (100), in particular enclose it in a precise fit by a peripheral web (113).

8. A device in accordance with any one of the preceding claims, wherein an abutment (107) is provided to determine the mounting position of the latching device (104), is in particular made as a projecting stamped device in the bottom board (100).

## Revendications

1. Dispositif de fixation d'un boîtier de charnière insérable dans un creux (1) d'une porte ou pareil avec une plaque inférieure pouvant être attachée à une porte ou pareil qui est destinée à être articulée par l'intermédiaire de la charnière, **caractérisé en ce que** la plaque inférieure (100) est insérable dans le creux (102) et un organe de verrouillage (104) pour le verrouillage du boîtier de charnière (108) est prévu sur la plaque inférieure (100), l'organe de verrouillage (104) étant formé en tant que verrouillage rapide, détachable, à engagement positif qui consiste **en ce qu'**une tête excentrique (105) orientable est attachée à la plaque inférieure (100), ou respectivement, au fond du boîtier de charnière qui chevauche dans sa position verrouillée le fond (114) du boîtier de charnière, ou respectivement, la plaque inférieure.

2. Dispositif selon la revendication 1, l'organe de verrouillage (104) étant attaché à la plaque inférieure (100) et pouvant être mis en prise avec le fond (114) du boîtier de charnière pour effectuer le verrouillage.

3. Dispositif selon la revendication 1, **caractérisé en ce que** l'organe de verrouillage est disposé au fond du boîtier de charnière et peut être mis en prise avec la plaque inférieure pour effectuer le verrouillage.

4. Dispositif selon l'une quelconque des revendications précédentes, le fond (114) du boîtier de charnière (108) comprenant un évidement (115) qui reçoit la partie de l'organe de verrouillage (104) chevauchant le fond, un creux (116) étant prévu de préférence dans l'évidement qui est traversé par l'organe de verrouillage en état monté.

5. Dispositif selon l'une quelconque des revendications précédentes, l'organe de verrouillage (104) serrant le boîtier de charnière (108) contre la plaque inférieure (100), une surface oblique en forme de clavette étant plus particulièrement prévue à la face inférieure de la tête excentrique (105) qui, quand l'organe de verrouillage est actionné, tire le fond (114) du boîtier de charnière (108) sur la plaque inférieure.

6. Dispositif selon l'une quelconque des revendications précédentes, la plaque inférieure (100) comprenant une coupe transversale sensiblement en forme de U avec des brides de fixation (101) étant latéralement en saillie par rapport au creux.

7. Dispositif selon l'une quelconque des revendications précédentes, le boîtier de charnière (108) possédant des brides (111), formées latéralement sur celui-ci, qui recouvrent la plaque inférieure (100) complètement, et plus particulièrement l'entourant de manière bien ajustée par l'intermédiaire d'une barrette circonférentielle (113).

8. Dispositif selon l'une quelconque des revendications précédentes, une butée (107) étant prévue pour la détermination de la position montée de l'organe de verrouillage (104), plus particulièrement étant formée en tant qu'empreinte en saillie dans la plaque inférieure (100).
